# EUROPEAN PATENT APPLICATION

(11) **EP 4 044 517 A1**
(43) Date of publication of application: **17.08.2022**
(21) Application number: 21157086.6
(22) Date of filing: 15.02.2021
(51) Int. Cl.: H04L 12/24, H04L 29/06, H04W 8/00

(54) **APPARATUS, METHOD, AND COMPUTER PROGRAM**

(71) Applicant: Nokia Technologies Oy, 02610 Espoo (FI)
(72) Inventor: LITTLE, Jonathan, Stroud, GL6 7HJ (GB); MOUROULIS, Ioannis, 19010 Athens (GR); WIEHE, Ulrich, 36251 Bad Hersfeld (DE)
(74) Representative: Style, Kelda Camilla Karen

(57) **Abstract**

A data store apparatus comprises means for: storing in one or more timer stores of the data store apparatus one or more timers, said timers being associated with data used by a stateless or state efficient consumer network function; monitoring said one or more timers; and in response to a trigger associated with a first timer of the one or more timers causing a notification to be sent to a consumer network function of the first timer.

## Description

### Field of the disclosure

The present disclosure relates to an apparatus, a method, and a computer program for a data store.

### Background

A communication system can be seen as a facility that enables communication sessions between two or more entities such as user terminals, base stations/access points and/or other nodes by providing carriers between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet. In a wireless communication system at least a part of a communication session between at least two stations occurs over a wireless link.

A user can access the communication system by means of an appropriate communication device or terminal. A communication device of a user is often referred to as user equipment (UE) or user device. A communication device is provided with an appropriate signal receiving and transmitting apparatus for enabling communications, for example enabling access to a communication network or communications directly with other users. The communication device may access a carrier provided by a station or access point and transmit and/or receive communications on the carrier.

The communication system and associated devices typically operate in accordance with a required standard or specification which sets out what the various entities associated with the system are permitted to do and how that should be achieved. Communication protocols and/or parameters which shall be used for the connection are also typically defined. One example of a communications system is UTRAN (3G radio). Another example of an architecture that is known as the long-term evolution (LTE) or the Universal Mobile Telecommunications System (UMTS) radio-access technology. Another example communication system is so called 5G radio or new radio (NR) access technology.

### Summary

According to one example, there is provided a data store apparatus comprising means for: storing in one or more timer stores of the data store apparatus one or more timers, said timers being associated with data used by a stateless or state efficient consumer network function; monitoring said one or more timers; and in response to a trigger associated with a first timer of the one or more timers causing a notification to be sent to a consumer network function of the first timer.

The means may be for storing state information for one or more communication devices, said state being used by one or more network function consumers.

The trigger may comprise one of an expiry of the first timer; a change in the first timer; and a deletion of the first timer.

The means may be for storing a subscription for the first timer indicating which one or more triggers the network function consumer of the first timer is to be notified.

The means may be for storing a call back reference for the first timer, the call back reference indicating the one or more network function consumers to which the notification is to be sent.

A first one of the timer stores may have one or more timers and is associated to a specific record related to a state of a communication device.

The means may be for deleting the timers of the first one of the timer stores when the associated specific record is deleted.

The means may be for creating, modifying or deleting a timer of the first one of the timer stores in response to receiving a request from a consumer network function which indicates the associated specific record.

A second one of the timer stores may have one or more timers required for processing of a stateless or state efficient consumer network function.

The second one of the timer stores may be stored in a timer stores directly under a realm and storage.

The second one of the timer stores may have timers for one or more non call processing related activities of a communication device.

The means may be for creating, modifying or deleting a timer of the second one of the timer stores in response to receiving a request from a network function consumer which indicates the associated timer resource.

The means may be for receiving a search request from a network function consumer for information about one or more timers, performing a search in accordance with the search request to provide a search result comprising information about one or more timers and for providing a response comprising the search result.

The search request may comprise a filter and the search result comprises information about one or more timers satisfying the filter, the filter comprising one or more of a timer status and a meta data tag associated with the timer.

The data store apparatus may comprise an unstructured data storage function.

According to another example, there is provided an apparatus in a consumer network function comprising means for: receiving a notification from a data store apparatus comprising information about a trigger associated with a first timer, said first timer being associated with data used by the consumer network function, said consumer network function comprising a stateless or state efficient consumer network function.

The timer may be associated with state used by said consumer network function.

The trigger may comprise one of an expiry of the first timer; a change in the first timer; and a deletion of the first timer.

The means may be for subscribing to notification of one or more triggers associated with the first timer.

The means may be for providing a call back reference for the first timer identifying the consumer network function.

A first timer type may be associated to a specific record related to a state of a communication device.

The means may be for causing a request to be sent to create, modify or delete a timer of the first type, said request indicating the associated specific record for the first timer type.

A second timer type may be required for processing of a stateless or state efficient consumer network function.

The second timer type may be for one or more non call processing related activities of a communication device.

The means may be for causing a request to be sent to create, modify or delete a timer of the second type, the request indicating the associated timer resource.

The means may be for causing a search request to be sent to the data store apparatus for information about one or more timers and receiving a response comprising a search result.

The search request may comprise a filter and the search result comprises information about one or more timers satisfying the filter, the filter comprising one or more of a timer status and a meta data tag associated with the timer.

The data store apparatus may comprise an unstructured data storage function.

According to an aspect there is provided an data store apparatus comprising at least one processor and at least one memory including computer code for one or more programs, the at least one memory and the computer code configured, with the at least one processor, to cause the apparatus at least to: store in one or more timer stores of the data store apparatus one or more timers, said timers being associated with data used by a stateless or state efficient consumer network function; monitor said one or more timers; and in response to a trigger associated with a first timer of the one or more timers cause a notification to be sent to a consumer network function of the first timer.

The at least one memory and the computer code may be configured, with the at least one processor, to cause the apparatus at least to: store state information for one or more communication devices, said state being used by one or more network function consumers.

The trigger may comprise one of an expiry of the first timer; a change in the first timer; and a deletion of the first timer.

The at least one memory and the computer code may be configured, with the at least one processor, to cause the apparatus at least to: store a subscription for the first timer indicating which one or more triggers the network function consumer of the first timer is to be notified.

The at least one memory and the computer code may be configured, with the at least one processor, to cause the apparatus at least to: store a call back reference for the first timer, the call back reference indicating the one or more network function consumers to which the notification is to be sent.

A first one of the timer stores may have one or more timers and is associated to a specific record related to a state of a communication device.

The at least one memory and the computer code may be configured, with the at least one processor, to cause the apparatus at least to: delete the timers of the first one of the timer stores when the associated specific record is deleted.

The at least one memory and the computer code may be configured, with the at least one processor, to cause the apparatus at least to: create, modify or delete a timer of the first one of the timer stores in response to receiving a request from a consumer network function which indicates the associated specific record.

A second one of the timer stores may have one or more timers required for processing of a stateless or state efficient consumer network function.

The second one of the timer stores may be stored in a timer stores directly under a realm and storage.

The second one of the timer stores may have timers for one or more non call processing related activities of a communication device.

The at least one memory and the computer code may be configured, with the at least one processor, to cause the apparatus at least to: for create, modify or delete a timer of the second one of the timer stores in response to receiving a request from a network function consumer which indicates the associated timer resource.

The at least one memory and the computer code may be configured, with the at least one processor, to cause the apparatus at least to: receive a search request from a network function consumer for information about one or more timers; perform a search in accordance with the search request to provide a search result comprising information about one or more timers; and provide a response comprising the search result.

The search request may comprise a filter and the search result comprises information about one or more timers satisfying the filter, the filter comprising one or more of a timer status and a meta data tag associated with the timer.

The data store apparatus may comprise an unstructured data storage function.

According to another example, there is provided an apparatus in a consumer network function, the apparatus comprising at least one processor and at least one memory including computer code for one or more programs, the at least one memory and the computer code configured, with the at least one processor, to cause the apparatus at least to: receive a notification from a data store apparatus comprising information about a trigger associated with a first timer, said first timer being associated with data used by the consumer network function, said consumer network function comprising a stateless or state efficient consumer network function.

The timer may be associated with state used by said consumer network function.

The trigger may comprise one of an expiry of the first timer; a change in the first timer; and a deletion of the first timer.

The at least one memory and the computer code may be configured, with the at least one processor, to cause the apparatus at least to: subscribe to notification of one or more triggers associated with the first timer.

The at least one memory and the computer code may be configured, with the at least one processor, to cause the apparatus at least to: provide a call back reference for the first timer identifying the consumer network function.

A first timer type may be associated to a specific record related to a state of a communication device.

The at least one memory and the computer code may be configured, with the at least one processor, to cause the apparatus at least to: cause a request to be sent to create, modify or delete a timer of the first type, said request indicating the associated specific record for the first timer type.

A second timer type may be required for processing of a stateless or state efficient consumer network function.

The second timer type may be for one or more non call processing related activities of a communication device.

The at least one memory and the computer code may be configured, with the at least one processor, to cause the apparatus at least to: cause a request to be sent to create, modify or delete a timer of the second type, the request indicating the associated timer resource.

The at least one memory and the computer code may be configured, with the at least one processor, to cause the apparatus at least to: cause a search request to be sent to the data store apparatus for information about one or more timer; and receive a response comprising a search result.

The search request may comprise a filter and the search result comprises information about one or more timers satisfying the filter, the filter comprising one or more of a timer status and a meta data tag associated with the timer.

The data store apparatus may comprise an unstructured data storage function.

According to another example, there is provided a data store apparatus comprising circuitry configured to: store in one or more timer stores of the data store apparatus one or more timers, said timers being associated with data used by a stateless or state efficient consumer network function; monitor said one or more timers; and in response to a trigger associated with a first timer of the one or more timers cause a notification to be sent to a consumer network function of the first timer.

The apparatus may comprise circuitry configured to: store state information for one or more communication devices, said state being used by one or more network function consumers.

The trigger may comprise one of an expiry of the first timer; a change in the first timer; and a deletion of the first timer.

The apparatus may comprise circuitry configured to: store a subscription for the first timer indicating which one or more triggers the network function consumer of the first timer is to be notified.

The apparatus may comprise circuitry configured to: store a call back reference for the first timer, the call back reference indicating the one or more network function consumers to which the notification is to be sent.

A first one of the timer stores may have one or more timers and is associated to a specific record related to a state of a communication device.

The apparatus may comprise circuitry configured to: delete the timers of the first one of the timer stores when the associated specific record is deleted.

The apparatus may comprise circuitry configured to: create, modify or delete a timer of the first one of the timer stores in response to receiving a request from a consumer network function which indicates the associated specific record.

A second one of the timer stores may have one or more timers required for processing of a stateless or state efficient consumer network function.

The second one of the timer stores may be stored in a timer stores directly under a realm and storage.

The second one of the timer stores may have timers for one or more non call processing related activities of a communication device.

The apparatus may comprise circuitry configured to: create, modify or delete a timer of the second one of the timer stores in response to receiving a request from a network function consumer which indicates the associated timer resource.

The apparatus may comprise circuitry configured to: receive a search request from a network function consumer for information about one or more timers; perform a search in accordance with the search request to provide a search result comprising information about one or more timers; and provide a response comprising the search result.

The search request may comprise a filter and the search result comprises information about one or more timers satisfying the filter, the filter comprising one or more of a timer status and a meta data tag associated with the timer.

The data store apparatus may comprise an unstructured data storage function. According to another example, there is provided an apparatus in a consumer network comprising circuitry configured to: receive a notification from a data store apparatus comprising information about a trigger associated with a first timer, said first timer being associated with data used by the consumer network function, said consumer network function comprising a stateless or state efficient consumer network function.

The timer may be associated with state used by said consumer network function.

The trigger may comprise one of an expiry of the first timer; a change in the first timer; and a deletion of the first timer.

The apparatus may comprise circuitry configured to: subscribe to notification of one or more triggers associated with the first timer.

The apparatus may comprise circuitry configured to: provide a call back reference for the first timer identifying the consumer network function.

A first timer type may be associated to a specific record related to a state of a communication device.

The apparatus may comprise circuitry configured to: cause a request to be sent to create, modify or delete a timer of the first type, said request indicating the associated specific record for the first timer type.

A second timer type may be required for processing of a stateless or state efficient consumer network function.

The second timer type may be for one or more non call processing related activities of a communication device.

The apparatus may comprise circuitry configured to: cause a request to be sent to create, modify or delete a timer of the second type, the request indicating the associated timer resource.

The apparatus may comprise circuitry configured to: cause a search request to be sent to the data store apparatus for information about one or more timer; and receive a response comprising a search result.

The search request may comprise a filter and the search result comprises information about one or more timers satisfying the filter, the filter comprising one or more of a timer status and a meta data tag associated with the timer.

The data store apparatus may comprise an unstructured data storage function.

According to one example, there is provided a method comprising: storing in one or more timer stores one or more timers, said timers being associated with data used by a stateless or state efficient consumer network function; monitoring said one or more timers; and in response to a trigger associated with a first timer of the one or more timers causing a notification to be sent to a consumer network function of the first timer.

The time stores may be provided in a data store apparatus.

The method may be performed by a data store apparatus.

The method may comprise storing state information for one or more communication devices, said state being used by one or more network function consumers.

The trigger may comprise one of an expiry of the first timer; a change in the first timer; and a deletion of the first timer.

The method may comprise storing a subscription for the first timer indicating which one or more triggers the network function consumer of the first timer is to be notified.

The method may comprise storing a call back reference for the first timer, the call back reference indicating the one or more network function consumers to which the notification is to be sent.

A first one of the timer stores may have one or more timers and is associated to a specific record related to a state of a communication device.

The method may comprise deleting the timers of the first one of the timer stores when the associated specific record is deleted.

The method may comprise creating, modifying or deleting a timer of the first one of the timer stores in response to receiving a request from a consumer network function which indicates the associated specific record.

A second one of the timer stores may have one or more timers required for processing of a stateless or state efficient consumer network function.

The second one of the timer stores may be stored in a timer stores directly under a realm and storage.

The second one of the timer stores may have timers for one or more non call processing related activities of a communication device.

The method may comprise creating, modifying or deleting a timer of the second one of the timer stores in response to receiving a request from a network function consumer which indicates the associated timer resource.

The method may comprise receiving a search request from a network function consumer for information about one or more timers, performing a search in accordance with the search request to provide a search result comprising information about one or more timers and for providing a response comprising the search result.

The search request may comprise a filter and the search result comprises information about one or more timers satisfying the filter, the filter comprising one or more of a timer status and a meta data tag associated with the timer.

The data store apparatus may comprise an unstructured data storage function.

According to another example, there is provided a method comprising: receiving a notification from a data store apparatus comprising information about a trigger associated with a first timer, said first timer being associated with data used by a consumer network function, said consumer network function comprising a stateless or state efficient consumer network function.

The timer may be associated with state used by said consumer network function.

The trigger may comprise one of an expiry of the first timer; a change in the first timer; and a deletion of the first timer.

The method may comprise subscribing to notification of one or more triggers associated with the first timer.

The method may comprise providing a call back reference for the first timer identifying the consumer network function.

A first timer type may be associated to a specific record related to a state of a communication device.

The method may comprise causing a request to be sent to create, modify or delete a timer of the first type, said request indicating the associated specific record for the first timer type.

A second timer type may be required for processing of a stateless or state efficient consumer network function.

The second timer type may be for one or more non call processing related activities of a communication device.

The method may comprise causing a request to be sent to create, modify or delete a timer of the second type, the request indicating the associated timer resource.

The method may comprise causing a search request to be sent to the data store apparatus for information about one or more timers and receiving a response comprising a search result.

The search request may comprise a filter and the search result comprises information about one or more timers satisfying the filter, the filter comprising one or more of a timer status and a meta data tag associated with the timer.

The data store apparatus may comprise an unstructured data storage function.

According to another example, there is provided a computer program comprising computer executable code which when run on at least one processor is configured to: store in one or more timer stores of a data store apparatus one or more timers, said timers being associated with data used by a stateless or state efficient consumer network function; monitor said one or more timers; and in response to a trigger associated with a first timer of the one or more timers cause a notification to be sent to a consumer network function of the first timer.

The computer program may comprise computer executable code which when run on at least one processor is configured to: store state information for one or more communication devices, said state being used by one or more network function consumers.

The trigger may comprise one of an expiry of the first timer; a change in the first timer; and a deletion of the first timer.

The computer program may comprise computer executable code which when run on at least one processor is configured to: store a subscription for the first timer indicating which one or more triggers the network function consumer of the first timer is to be notified.

The computer program may comprise computer executable code which when run on at least one processor is configured to: store a call back reference for the first timer, the call back reference indicating the one or more network function consumers to which the notification is to be sent.

A first one of the timer stores may have one or more timers and is associated to a specific record related to a state of a communication device.

The computer program may comprise computer executable code which when run on at least one processor is configured to: delete the timers of the first one of the timer stores when the associated specific record is deleted.

The computer program may comprise computer executable code which when run on at least one processor is configured to: create, modify or delete a timer of the first one of the timer stores in response to receiving a request from a consumer network function which indicates the associated specific record.

A second one of the timer stores may have one or more timers required for processing of a stateless or state efficient consumer network function.

The second one of the timer stores may be stored in a timer stores directly under a realm and storage.

The second one of the timer stores may have timers for one or more non call processing related activities of a communication device.

The computer program may comprise computer executable code which when run on at least one processor is configured to: create, modify or delete a timer of the second one of the timer stores in response to receiving a request from a network function consumer which indicates the associated timer resource.

The computer program may comprise computer executable code which when run on at least one processor is configured to:: receive a search request from a network function consumer for information about one or more timers; perform a search in accordance with the search request to provide a search result comprising information about one or more timers; and provide a response comprising the search result.

The search request may comprise a filter and the search result comprises information about one or more timers satisfying the filter, the filter comprising one or more of a timer status and a meta data tag associated with the timer.

The data store apparatus may comprise an unstructured data storage function.

According to another example, there is provided a computer program comprising computer executable code which when run on at least one processor is configured to: receive a notification from a data store apparatus comprising information about a trigger associated with a first timer, said first timer being associated with data used by the consumer network function, said consumer network function comprising a stateless or state efficient consumer network function.

The timer may be associated with state used by said consumer network function.

The trigger may comprise one of an expiry of the first timer; a change in the first timer; and a deletion of the first timer.

The computer program may comprise computer executable code which when run on at least one processor is configured to: subscribe to notification of one or more triggers associated with the first timer.

The apparatus may comprise circuitry configured to: provide a call back reference for the first timer identifying the consumer network function.

A first timer type may be associated to a specific record related to a state of a communication device.

The computer program may comprise computer executable code which when run on at least one processor is configured to: cause a request to be sent to create, modify or delete a timer of the first type, said request indicating the associated specific record for the first timer type.

A second timer type may be required for processing of a stateless or state efficient consumer network function.

The second timer type may be for one or more non call processing related activities of a communication device.

The computer program may comprise computer executable code which when run on at least one processor is configured to: cause a request to be sent to create, modify or delete a timer of the second type, the request indicating the associated timer resource.

The computer program may comprise computer executable code which when run on at least one processor is configured to: cause a search request to be sent to the data store apparatus for information about one or more timer; and receive a response comprising a search result.

The search request may comprise a filter and the search result comprises information about one or more timers satisfying the filter, the filter comprising one or more of a timer status and a meta data tag associated with the timer.

The data store apparatus may comprise an unstructured data storage function.

According to another example, there is provided an application programming interface for a data storage function, the application programming interface comprising a uniform resource identifier structure comprising, in the following order:
a realm identity; a storage identity and a timer store.

According to another example, there is provided an application programming interface for a data storage function, the application programming interface comprising a uniform resource identifier structure comprising, in the following order:
a realm identity; a storage identity; a record identity; and a timer store.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### List of abbreviations

- AF:: Application Function
- AMF:: Access Management Function
- API:: Application Protocol Interface
- BS:: Base Station
- CNF:: Cloud-native/Containarized Network Function
- CU:: Centralized Unit
- DL:: Downlink
- DU:: Distributed Unit
- eNB:: eNodeB
- gNB:: gNodeB
- GSM:: Global System for Mobile communication
- GUTI:: Global Unique Temporary Identifier
- HSS:: Home Subscriber Server
- IoT:: Internet of Things
- LTE:: Long Term Evolution
- MAC:: Medium Access Control
- MS:: Mobile Station
- MTC:: Machine Type Communication
- NEF:: Network Exposure Function
- NF:: Network Function

- NGAP:: NG Application Protocol
- NR:: New radio
- NRF:: Network function Repository Function
- OAM:: Operation Administration and Maintenance
- PDU:: Packet Data Unit
- RAM:: Random Access Memory
- (R)AN:: (Radio) Access Network
- ROM:: Read Only Memory
- SMF:: Session Management Function
- S-NSSAI:: Single-Network Slice Selection Assistance Information
- SUCI:: Subscriber Concealed Identifier
- SUPI:: Subscriber Permanent Identifier
- TIMSI:: Temporary Mobile Subscriber Identifier
- TR:: Technical Report
- TS:: Technical Specification
- TTL:: Time To Live
- UDSF:: Unstructured Data Storage Function
- UE:: User Equipment
- UMTS:: Universal Mobile Telecommunication System
- URI:: Uniform Resource Identifier
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:

Figure 1 shows a schematic representation of a 5G system;

Figure 2 shows a schematic representation of an apparatus;

Figure 3 shows a schematic representation of a non-volatile memory medium storing instructions which when executed by a processor allow a processor to perform one or more of the steps of the methods of some embodiments;

Figure 4 shows a schematic representation of the structure of the resource uniform resource identifier of a an unstructured data storage function UDSF application programming interface;

Figure 5 shows a table providing a definition of a type record meta;

Figure 6 shows a resource URI structure of the UDSF API including the timers resource of some embodiments;

Figure 7 overview of the timer resources and methods of some embodiments.

Figure 8 shows a table providing a definition of a type timer data structure of some embodiments;

Figure 9 shows a table providing a definition of a type record of some embodiments in order to support record related timers;

Figure 10 shows a table of URI query parameters of some embodiments;

Figure 11 shows a signalling diagram for the explicit creation of an autonomous timer in the UDSF;

Figure 12 shows a signalling diagram for the explicit creation of a record attached timer in the UDSF;

Figure 13 shows a signalling diagram for the implicit creation of a record attached timers s in the UDSF;

Figure 14 shows a signalling diagram for the modification of an autonomous timer in the UDSF;

Figure 15 shows a signalling diagram for the modification of a record attached timer in the UDSF;

Figure 16 shows a signalling diagram for the autonomous timer retrieval in the UDSF;

Figure 17 shows a signalling diagram for a record attached timer retrieval in the UDSF;

Figure 18 shows a signalling diagram for a record attached timers list retrieval in the UDSF;

Figure 19 shows a signalling diagram for the autonomous timer deletion in the UDSF;

Figure 20 shows a signalling diagram for the deletion of a plurality of autonomous timers in the UDSF;

Figure 21 shows a signalling diagram for the record attached timer deletion in the UDSF;

Figure 22 shows a signalling diagram for the deletion of a plurality of record attached timers in the UDSF;

Figure 23 shows a signalling diagram for the autonomous timer search in the UDSF;

Figure 24 shows a signalling diagram for the record attached timer search in the UDSF;

Figure 25 shows a signalling diagram for the wild card record attached timer search in the UDSF;

Figure 26 shows a signalling diagram for a timer expiry notification;

Figure 27 shows a table with the definition of type subscription filters of some embodiments;

Figure 28 shows a table of a definition of type enumeration record operations with support for the timers of some embodiments;

Figure 29 shows a signalling diagram for subscription to a timer resource;

Figure 30 shows a table of record notification type with support for record timers;

Figure 31 shows a signalling diagram for the notification of record attached timers;

Figure 32 shows a table of timer record notification type;

Figure 33 shows a signalling diagram for the notification of autonomous timers;

Figure 34 shows a method of some examples; and

Figure 35 shows a method of some examples.

### Detailed Description of the Figures

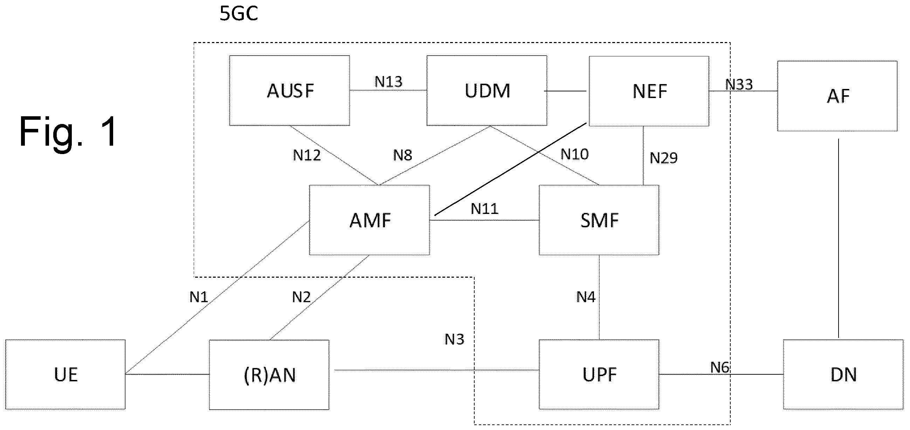

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a terminal, a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5G may be used for mobile access or for fixed access. The 5GC may comprise an access management function (AMF), a session management function (SMF), an authentication server function (AUSF), a user data management (UDM), a user plane function (UPF) and/or a network exposure function (NEF). Although not illustrated the 5GC may comprise other network functions (NF), such as an unstructured data storage function (UDSF).

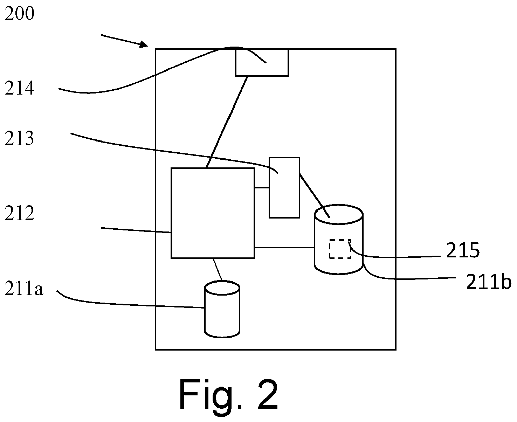

Figure 2 illustrates an example of an apparatus 200. The apparatus may comprise at least one memory. By way of example only the memory may comprise random access memory (RAM) 211a and/or at least on read only memory (ROM) 211b. In other embodiments, the memory may alternatively or additionally be provided by any other suitable apparatus. The apparatus may comprise at least one processor 212, 213. The apparatus may comprise an input/output interface 214. The at least one processor may be coupled to the at least one memory. The at least one processor may be configured to execute an appropriate software code 215. The software code 215 may for example allow to perform one or more steps to perform one or more of the present aspects. The software code 215 may be stored in the at least one memory. By way of example only, the software code may be stored in the ROM 211b.

The UDSF may comprise apparatus such as shown in Figure 2 along with suitable data storage. The data storage may be provided by one or more databases or by any other suitable data storage.

A network function consumer may comprise apparatus such as shown in Figure 2.

One or more aspect of this disclosure relate to a Nudsf_DataRepository service application programming interface (API). The Nudsf_DataRepository service API is standardized in Rel-16 and defines how UDSF service consumers may store and retrieve unstructured data in a UDSF.

As per TS 29.598 data in a UDSF may be placed in records. Each record may have a record identifier (record ID). Each record may correspond for example to a UE. Each record may comprise none, one or more blocks. For example, a record may comprise a mobility management block and/or a session management block. Each block may comprise a content with arbitrary structure. The content and structure of the block(s) is not known by the UDSF. Each record may include record meta (i.e. record metadata).

Storage and retrieval of records in the UDSF can be very efficient when the record ID is known by the UDSF service consumer. However, in many cases the record ID is not known by the UDSF service consumer (e.g. for example where Stateless NF is having to serve a request). In this case, USDSF consumer may have to first perform a search in the UDSF for records based on GET query parameters that are applied as metadata filters. These filters may be record meta information elements (IE). Record meta filters are based on tags.

Record meta tags is a map of tag name/values pairs. In order to assist searching within the tags, a meta schema feature has been introduced in Rel-16. When the meta schema is supported by the UDSF and the NF consumer, the NF consumer can store meta schemas in the UDSF and link the record meta of a record to a stored meta schema. The linked meta schema indicates the intended use for each tag e.g. as unique search key, search key, count key or other key. The meta schema feature handles all tags as strings.

Each record may have a single "ttl" (time to live) timer associated to it. This timer refers to the storage lifetime of the record. After the time indicated by the ttl has been reach the record is deleted.

Some embodiments relate to an efficient store, search, and/or retrieval in the UDSF of the tags. Some embodiments may trigger notifications upon tag expiration.

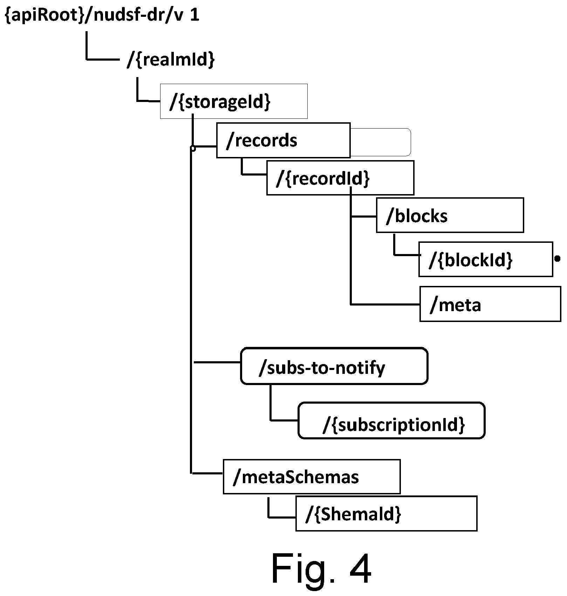

Figure 4 shows a schematic representation of a resource uniform resource identifier of a UDSF application programming interface as per TS29.598 v16.3.0. The UDSF API comprises a meta schema and a record meta referencing the schema ID (Schema ID) of the meta schema.

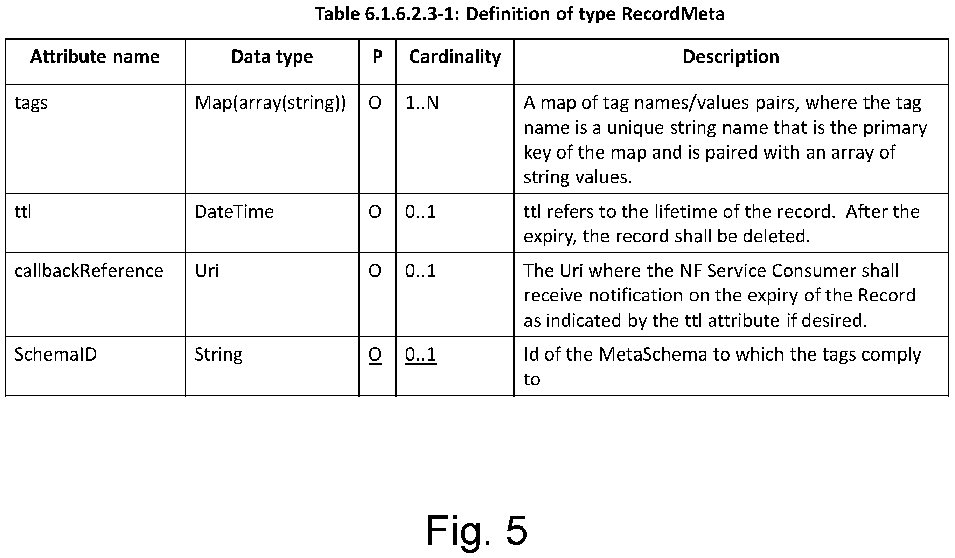

Figure 5 shows a table providing a definition of a type record meta as per TS29.598 v 16.3.0.

The record meta may comprise tags attributes. Tags is a map between a tag name and one or more tag values. The tag name is a unique string name that is the primary key of the map. The one or more tag values may be an array of string values.

The record meta may comprise a time to live (ttl) timer attribute. The ttl refers to the lifetime of the record. After the expiry of the ttl timer the record is deleted.

The record meta may comprise a call back reference attribute. The call backreference comprises a URI where the NF service consumer may receive notification on the expiry of the ttl timer.

The record meta may comprise a reference to the schema ID. The schema ID comprises an ID of the meta schema with which the tags comply.

Some embodiments provide one or more timers to manage tag expiry. Stateless Network Functions, or state-efficient NFs operating within the NF set may need to store timers in and retrieve timers from the UDSF. These timers may be related to user equipment state and/or other non UE call processing related activities.

Currently there is no standardized solution as to how a UDSF consumer can store and monitor the expiration of such timers so as to trigger the appropriate actions upon timer expiry. Without timer specific support in the UDSF responsibility of monitoring timer expiration is managed by consumers. For example the consumers may poll using external trigger or periodically poll the UDSF for the relevant records where the timers are stored.

The existing UDSF record resource structure and API might be used to store timers. A UDSF consumer can implicitly store timers as strings within a record by adding a tag in the meta data. In that case the consumer can then search/poll for "timers". This may in some situations provide inefficient searches as the meta schema handles the time stamp values as normal strings. The key value pairs used in record meta do not support timer specific logic such as issuing notifications upon expiration. Polling may not have a required timing accuracy as the timers may have already expired by the time the records are retrieved.

Some embodiments may provide a UDSF API which allow timers can be explicitly stored and handled by the UDSF as a separate resource. The NF Consumers may use the UDSF API to efficiently poll for expired timers and/or be notified upon timer expiration.

Some embodiments may provide the UDSF API with a timer resource structure. Some embodiments will provide operations that will be designed to store, retrieve and/or search for timers. Some embodiments will provide operations that will be designed to store, retrieve and/or search for timers and trigger timer related notifications.

Some embodiments may support the correlation of timers to records.

Some embodiments may provide one or more timers. Information about the timers may be stored in the UDSF.

In some embodiments, two types of timer may be supported. It should be appreciated that in other embodiments, only one of these two types of timer may be supported.

The timer may be an "autonomous" timer or a "record attached" timer.

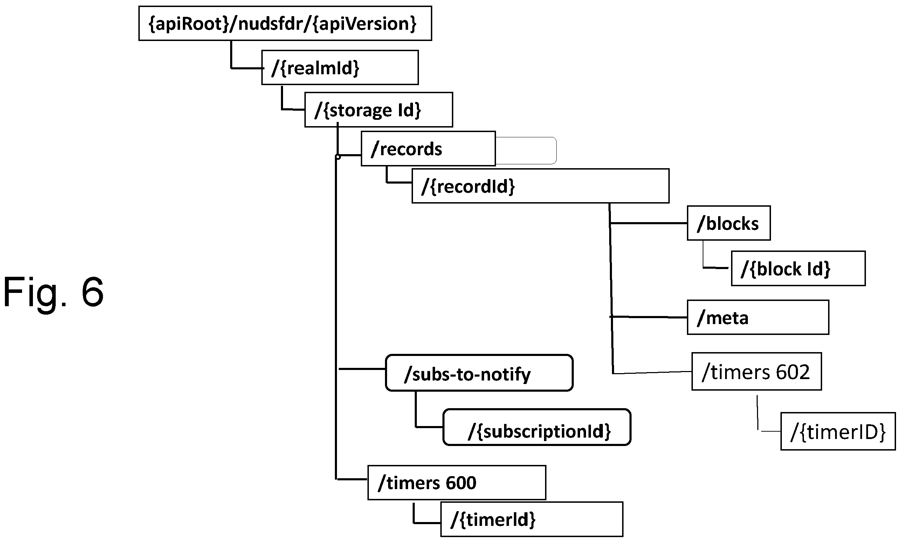

An autonomous timer is not explicitly associated to a record. In this regard, reference is made to Figure 6 which shows a modification to the resource URI structure of the API of Figure 4 with the timers of some embodiments. Autonomous timers may be stored under a timers store directly under a realm and storage. This is referenced 600.

A record attached timer is associated to a specific record. A record may have zero, one or more timers. In some embodiments, each timer can have only one record to which it belongs. Record attached timers are stored under the relevant store within a record. This is referenced 602 in Figure 6.

The operations on autonomous timers may be defined within a timer related service (e.g. Nudsf_Timer service) or an extension to the Nudsf_DataRepository service. Operations on record attached timers may be defined as an extension to the Nudsf_DataRepository service.

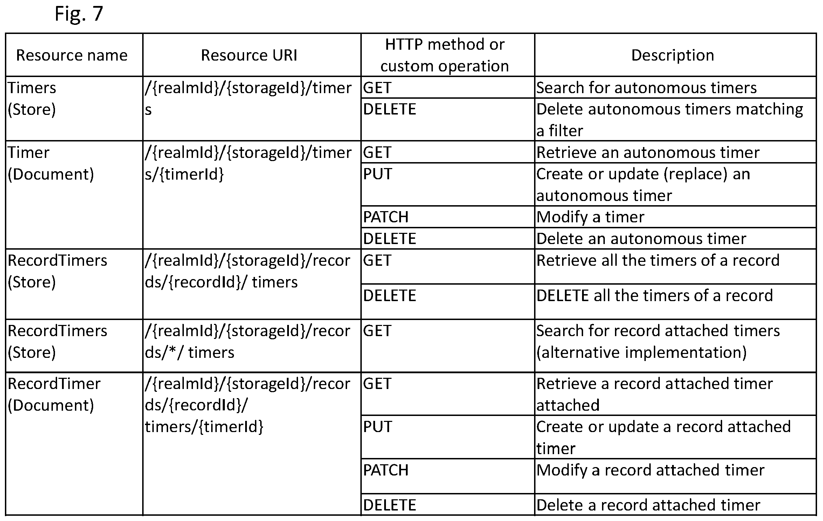

Figure 7 shows a summary of the resources and methods of some embodiments. It should be appreciated, that some embodiments may use only one of these resources and one method, whilst some embodiments may use two or more or all of these resources and two or more or all of these methods. The resources and methods shown in the Table of Figures 7 will be described in more detail later.

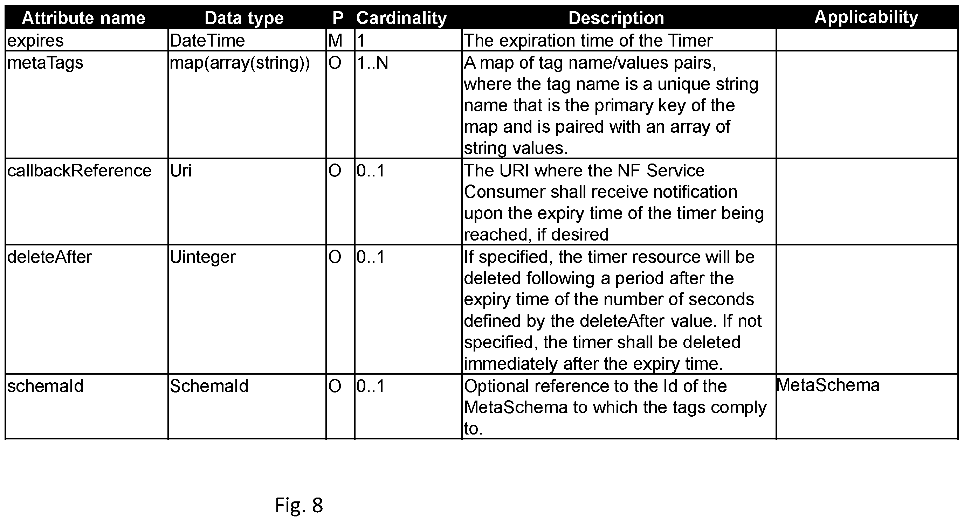

Figure 8 shows a timer data structure which is used in some embodiments.

Each timer has expiration time which is stored in the expires field.

In some embodiments, the timer may have one or more of the following attributes:
- meta tags. This is a map of tag name/values pairs. The tag name is a unique string name that is the primary key of the map and is paired with an array of string values. These tags may be used as timer attributes. The tags may be used for search operations
- call back reference: This is the URI where the NF service consumer receives notification upon the expiry time of the timer being reached
- delete after: If this is specified, the timer resource will be deleted following a period after the expiry time of the number of seconds defined by the delete after value. If not specified, the timer may be deleted immediately after the expiry time or a default amount of time after the expiry time.
- schema ID: Optional reference to the ID of the meta schema to which the timer's meta tags comply to. This may be used to optimize timer searches based on their meta tags.

Alternatively, in some embodiments, the timer ID may be provided within the timer data structure as an IE. In this example, the timer ID may be the same ID as used in the resource URI path.

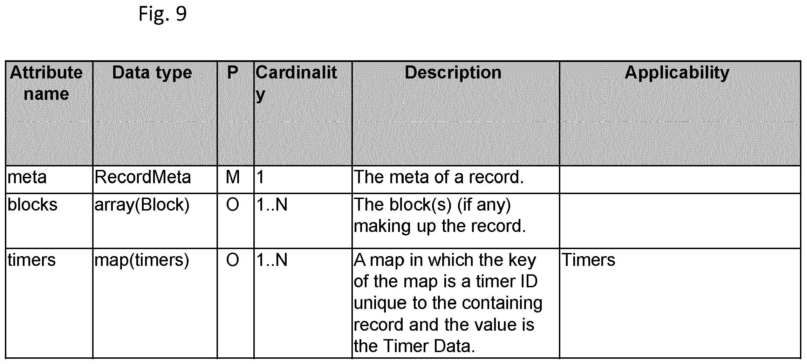

In order to support a record attached timer, the record data type is extended with a map of timers as shown in the Table of Figure 9. This table shows the attributes meta, blocks and timers. The meta attribute is the meta of a record. The blocks attribute is the blocks, if any making up the record. The timers attribute is a map in which the key of the map is a timer ID. This timer ID is unique to the containing record and the value of each item in the map is the timer data.

In some embodiments, a timer may be created. A timer may be modified. A timer may be deleted.

In some embodiments, autonomous timers may be created or updated via the PUT method in the timers resource store.

In some embodiments, autonomous timers may be deleted via the DELETE method upon a timer.

In some embodiments, one or more autonomous timers may be deleted via the DELETE method in the timers resource Store.

In some embodiments, record attached timers may be implicitly created or modified via the related PUT method upon the record resource.

In some embodiments, record attached timers may be explicitly created or modified via the related PUT method upon the record timer store within a record.

In some embodiments, record attached timers may be implicitly deleted via deleting the whole record via the DELETE operation.

In some embodiments, record attached timers may be explicitly deleted via the DELETE method on a timer within the record timer store within a record.

In some embodiments, record attached timers may be deleted via the delete method on the whole record timer store.

In some embodiments, timers can be retrieved via the GET operation on the relevant timer resource. Record attached timers may be retrieved by retrieving the record that contains them.

Autonomous timers may be retrieved via the following path:
/{realmId}/{storageld}/timers/{timerId}).

Record attached timers may be retrieved via the following path:
/{realmId}/{storageld}/records/{recordId}/timers{timerld}.

Some embodiments may support the search for timers. The UDSF service consumer may send a request to the UDSF to search for timers filtered by the provided 'filter' query parameter. This operation may be supported for one or both of the autonomous and record attached timers.

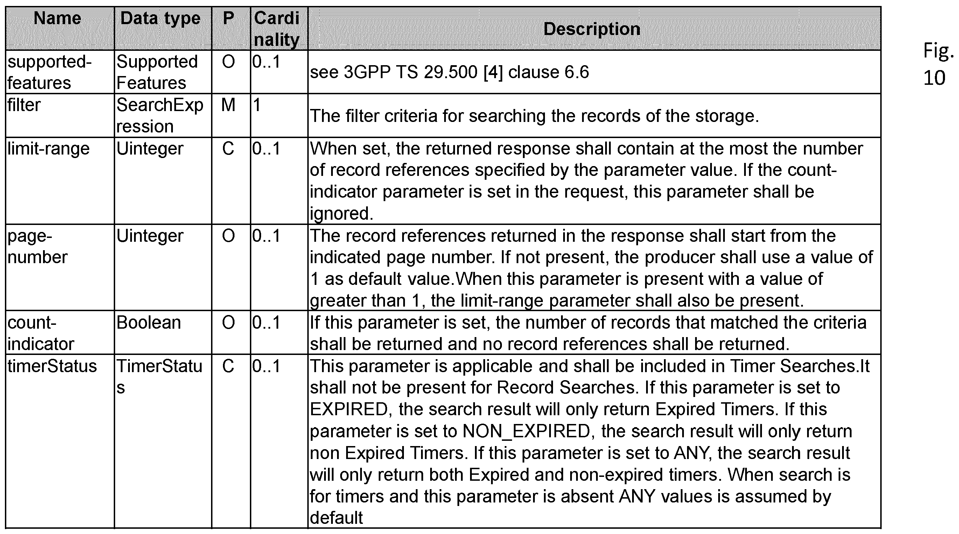

In some embodiments, a query parameter option "timer status" is provided in the search operations used for timers in order to support searches based on the timers expiry status and/or any other suitable status. In this regard, reference is made to the Table of Figure 10 which shows the URI query parameters supported by the

GET method to search for timers.

In some embodiments, this timer status parameter may be applicable to and may be included in timer searches. If this parameter is set to EXPIRED in the search, the search result will return expired timers. If this parameter is set to NON_EXPIRED, the search result will return non-expired timers. If this parameter is set to ANY, the search result will return both expired and non-expired timers. When the search is for timers and this parameter is absent, ANY values may be assumed by default.

Searches for autonomous timers may be sent to the /{realmld}/{storageld}/timers store.

Searches for record attached timers may be sent to the /{realmId}/{storageId}/records store. The presence of the timer status indicates that the search is for the timers store within the records and the filters apply to the record meta of the timers and not the records themselves.

In some embodiments, a search for record attached timers may be sent to the /{realmId}/{storageId}/records/*/timers. * represents a wildcard search which is used instead of a specific record ID.

In some embodiments, when a timer expires, the UDSF will notify the NF consumer by sending a relevant notification to the given call back reference.

In some embodiments, a NF may create a subscription for a timer in order to receive notification for timer changes, timer deletion and/or timer expiration by an extension of the subscribe/notify mechanism used for records.

The explicit autonomous timer creation or modification (e.g. replacement) of some embodiments will now be described. The NF Consumer may explicitly create or modify an autonomous timer via the HTTP PUT method on the /{realmld}/{storageld}/timers/{timerld} providing the timer ID. The PUT method may allow a stateless NF consumer to deduce the timer ID from the context. By way of example only, the this may be using a formula based on the UE SUPI.

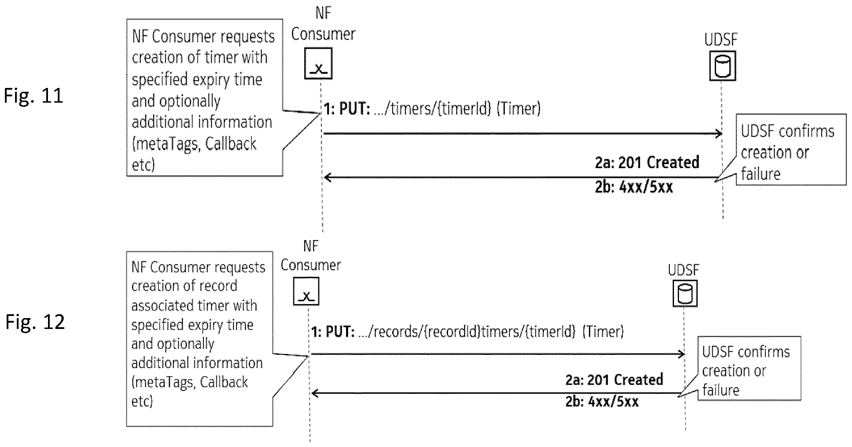

Reference is made to Figure 11 which shows a call flow for the explicit creation of an autonomous timer in UDSF.

In step 1: The NF service consumer (any NF) sends a PUT request to create the timer indicated by timer ID. The request body contains the autonomous timer to be created. Information about the timer to be created may be provided. The information may comprise the specified expiry time. Optionally, additional information such as meta tags and/or call back information may be provided.

If successful, in step 2a a success message, for example, a "201 Created" message is returned by the UDSF to the NF consumer.

If unsuccessful, in step 2b, a failure message is returned by the UDSF to the NF consumer. The failure message may comprise the appropriate HTTP status code indicating the error. The failure message may optionally include additional error information. The failure message may be a PUT response message. The error information may be provided in the PUT response body.

The explicit record attached timer creation or modification (e.g. replacement) of some embodiments will now be described. The NF Consumer may explicitly create or modify a record attached timer via the HTTP PUT method on the /{realmId}/{storageId}/records/{recordId}/timers/{timerId} resource, providing the timer ID.

Reference is made to Figure 12 which shows a call flow for the explicit creation of a record associated timer in the UDSF.

In step 1: The NF service consumer (any NF) sends a PUT request to create or update a record associated timer indicated by the record ID and timer ID. Information about the timer to be created may be provided. The information may comprise the specified expiry time. Optionally, additional information such as meta tags and/or call back information may be provided.

If successful, in step 2a a success message, for example, a "201 Created" message is returned by the UDSF to the NF consumer.

If unsuccessful, in step 2b, a failure message is returned by the UDSF to the NF consumer. The failure message may comprise the appropriate HTTP status code indicating the error. The failure message may optionally include additional error information. The failure message may be a PUT response message. The error information may be provided in the PUT response body.

This method may be used when the record referenced by the record ID already exists within the given realm and storage.

If the record attached timer is being replaced, the PUT request may be a timer replace request. In the replacement case, the response code would be 204 no content.

The implicit record attached timer creation or modification (e.g. replacement) of some embodiments will now be described. The NF Consumer may implicitly create or modify a record attached timer via the HTTP PUT method on the /{realmld}/{storageld}/records/{recordld} resource including within the record body the timers that are associated with this Record.

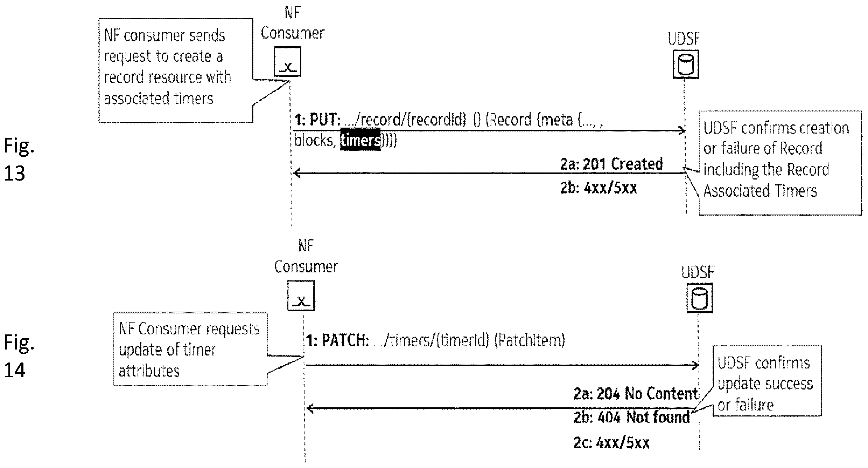

Reference is made to Figure 13 which shows a call flow for the implicit creation of a record associated timer in the UDSF.

In step 1: The NF service consumer (any NF) sends a PUT request to create or update a record associated timer indicated by the record ID. The request body record contains the record attached timers to be created or updated accordingly.

If successful, in step 2a a success message, for example, a "201 Created" message is returned by the UDSF to the NF consumer.

If unsuccessful, in step 2b, a failure message is returned by the UDSF to the NF consumer. The failure message may comprise the appropriate HTTP status code indicating the error. The failure message may optionally include additional error information. The failure message may be a PUT response message. The error information may be provided in the PUT response body.

The autonomous timer modification of some embodiments will now be described. The NF Consumer may explicitly create or modify an autonomous timer via the HTTP PATCH method on the /{realmld}/{storageld}/timers/{timerld} providing the timer ID and the modifications within the patch item.

Reference is made to Figure 14 which shows a call flow for the modification of an autonomous timer in UDSF.

In step 1: The NF service consumer (any NF) sends a PATCH request to modify the timer indicated by timer ID. The request body contains the autonomous timer to be modified.

If successful, in step 2a a success message, for example, a "204 No Content" message is returned by the UDSF to the NF consumer.

If the record does not exist, in step 2b, a message to indicate this is returned by the UDSF to the NF consumer. This message may be a "404 Not Found" HTTP status code.

For any other failure, in step 2c, a failure message is returned by the UDSF to the NF consumer. The failure message may comprise the appropriate HTTP status code indicating the error. This failure message may optionally include additional error information. The failure message may be a PATCH response message. The error information may be provided in the PATCH response body.

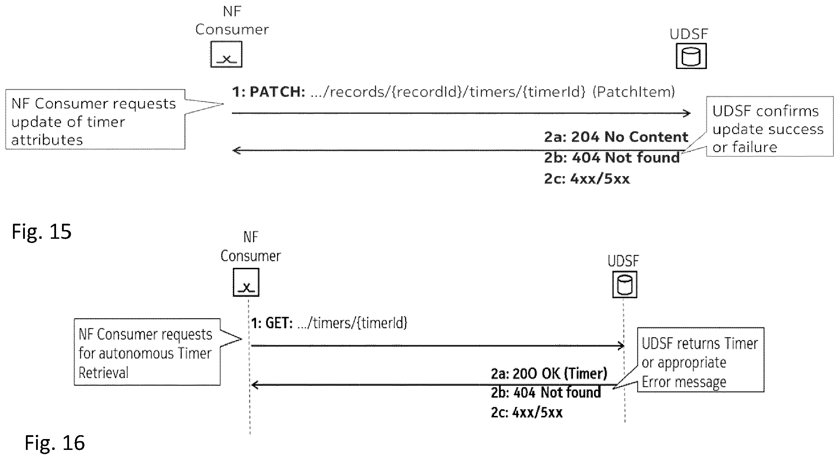

The record attached timer modification of some embodiments will now be described. The NF Consumer may explicitly create or modify an autonomous timer via the HTTP PATCH method on the /{realmId}/{storageId}/records/{recordId}/timers/{timerId} providing the timer ID and the modifications within the Patch Item. The following figure presents example call flow:
Reference is made to Figure 15 which shows a call flow for the modification of a record attached timer in the UDSF.

In step 1: The NF service consumer (any NF) sends a PATCH request to modify the timer indicated by timer ID. The request body contains the autonomous timer to be modified.

If successful, in step 2a a success message, for example, a "204 No Content" message is returned by the UDSF to the NF consumer.

If the record does not exist, in step 2b, a message to indicate this is returned by the UDSF to the NF consumer. This message may be a "404 Not Found" HTTP status code.

For any other failure, in step 2c, a failure message is returned by the UDSF to the NF consumer. The failure message may comprise the appropriate HTTP status code indicating the error. This failure message may optionally include additional error information. The failure message may be a PATCH response message. The error information may be provided in the PATCH response body.

The NF Consumer may request the autonomous timer via the HTTP GET method on the relevant resource (/{realmId}/{storageId}/timers/{timerId}).

Reference is made to Figure 16 which shows a call flow for a request for the retrieval of the autonomous timer.

In step 1: The NF service consumer (any NF) sends a GET request to the timer resource indicated by timer ID

If successful, in step 2a a success message, for example, a "200 OK" message is returned by the UDSF to the NF consumer. The message body may contain the timer.

If the timer for the given timer ID does not exist in the UDSF, in step 2b, a message to indicate this is returned by the UDSF to the NF consumer. This message may be a "404 Not Found" HTTP status message.

For any other failure, in step 2c, a failure message is returned by the UDSF to the NF consumer. The failure message may comprise the appropriate HTTP status code indicating the error. This failure message may optionally include additional error information. The failure message may be a GET response message. The error information may be provided in the GET response body.

The NF Consumer may retrieve a specific record attached timer via the HTTP GET method on the relevant timer resource (/{realmId}/{storageId}/records/{recordld}timers/{timerld}).

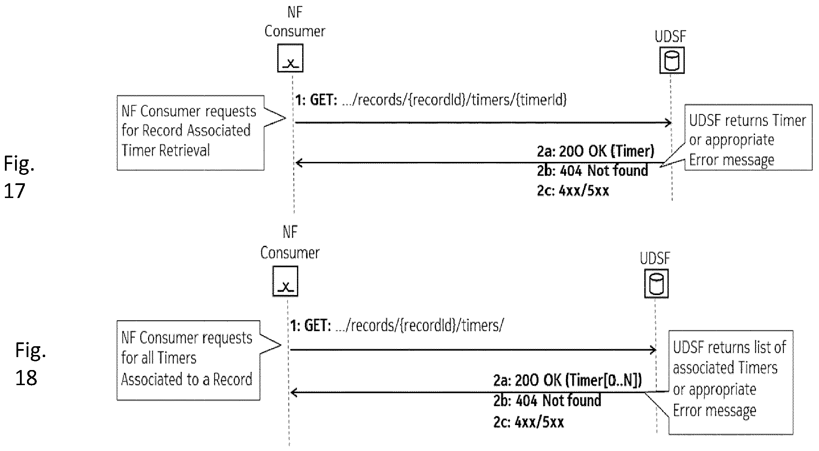

Reference is made to Figure 17 which shows a call flow for a request for the retrieval of the record specific timer.

In step 1: The NF service consumer (any NF) sends a GET request to the timer resource indicated by timer ID

If successful, in step 2a a success message, for example, a "200 OK" message is returned by the UDSF to the NF consumer. The message body may contain the timer.

If the timer for the given timer ID does not exist in the UDSF, in step 2b, a message to indicate this is returned by the UDSF to the NF consumer. This message may be a "404 Not Found" HTTP status message.

For any other failure, in step 2c, a failure message is returned by the UDSF to the NF consumer. The failure message may comprise the appropriate HTTP status code indicating the error. This failure message may optionally include additional error information. The failure message may be a GET response message. The error information may be provided in the GET response body.

The NF Consumer may retrieve the full list of the record associated timers related to a record via the HTTP GET method on the timer store within the record (/{realmId}/{storageId}/records/{recordId}/timers}).

Reference is made to Figure 18 which shows a call flow for a request for the retrieval of the timers associated with a specific record.

In step 1: The NF service consumer (any NF) sends a GET request to the timer store within a record,

If successful, in step 2a a success message, for example, a "200 OK" message is returned by the UDSF to the NF consumer. The message body may contain the timers. The message body may contain a map with the timers.

If the given record does not exist, or the timers resource for the given record does not exist in the UDSF, in step 2b, a message to indicate this is returned by the UDSF to the NF consumer. This message may be a "404 Not Found" HTTP status message if the specified record does not exist. The record does exist but it has no timers, the status code used may depend on whether the {recordld}/timers/ resource has been created but is empty, or the {recordld}/timers/ does not exist.

For any other failure, in step 2c, a failure message is returned by the UDSF to the NF consumer. The failure message may comprise the appropriate HTTP status code indicating the error. This failure message may optionally include additional error information. The failure message may be a GET response message. The error information may be provided in the GET response body.

The NF consumer may delete an autonomous timer via the HTTP DELETE method on the relevant timers store (/{realmId}/{storageId}/timers/{timerId}).

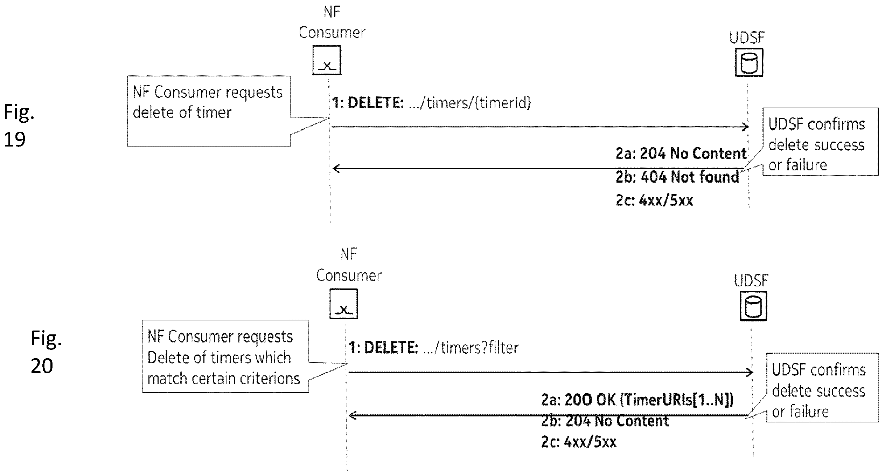

Reference is made to Figure 19 which shows a call flow the deletion of a single autonomous timer in the UDSF.

In step 1: The NF service consumer (any NF) sends a DELETE request to the timer resource indicated by timer ID

If successful, in step 2a a success message, for example, a "204 No Content" message is returned by the UDSF to the NF consumer. The timer is deleted.

If a timer for the given timer ID does not exist in the UDSF, in step 2b, a message to indicate this is returned by the UDSF to the NF consumer. This message may be a "404 Not Found" HTTP status code.

For any other failure, in step 2c, a failure message is returned by the UDSF to the NF consumer. The failure message may comprise the appropriate HTTP status code indicating the error. This failure message may optionally include additional error information. The failure message may be a DELETE response message. The error information may be provided in the DELETE response body.

The NF consumer may delete two or more autonomous timer via the HTTP DELETE method on the relevant timers store (/{realmld}/{storageld}/timers). The filter operation may be based on that used in the search operation using metaTags for records with the use of the "timerStatus" query parameter

Reference is made to Figure 20 which shows a call flow the deletion of a two more autonomous timers in the UDSF.

In step 1: The NF service consumer (any NF) sends a DELETE request to the timers resource along with the query filter. This will define the two or more autonomous timers which are to be deleted.

If there are one or more timers that meet the filter criteria, those timers are deleted in step 2a. A message may be returned by the UDSF to NF consumer. This message may comprise an indication that the timers have been deleted. The message may comprise information indicating the timers that have been deleted. The message may comprise a 200 OK message. The message body may contain a list with the URI of the timers that met the criteria.

If there is no match, in step 2b a message indicating this is returned by the UDSF to the NF consumer. This message may be a "204 No Content" message.

For a failure, in step 2c, a failure message is returned by the UDSF to the NF consumer. The failure message may comprise the appropriate HTTP status code indicating the error. This failure message may optionally include additional error information. The failure message may be a DELETE response message. The error information may be provided in the DELETE response body.

The NF Consumer may delete a record attached timer via the HTTP DELETE method on the relevant resource (/{realmId}/{storageId}/records/{recordId}/timers/{timerId}).

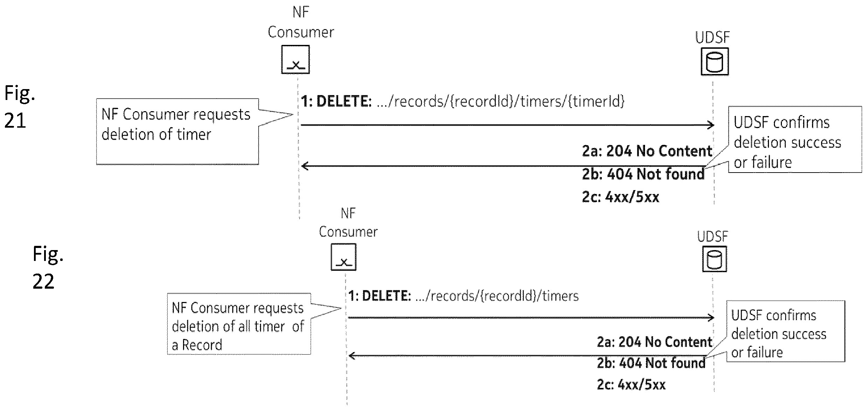

Reference is made to Figure 21 which shows a call flow the deletion of a single record attached timer in the UDSF.

In step 1: The NF service consumer (any NF) sends a DELETE request to the timer resource indicated by timer ID.

If successful, in step 2a a success message, for example, a "204 No Content" message is returned by the UDSF to the NF consumer. The timer is deleted.

If a timer for the given timer ID does not exist in the UDSF, in step 2b, a message to indicate this is returned by the UDSF to the NF consumer. This message may be a "404 Not Found" HTTP status code.

For any other failure, in step 2c, a failure message is returned by the UDSF to the NF consumer. The failure message may comprise the appropriate HTTP status code indicating the error. This failure message may optionally include additional error information. The failure message may be a DELETE response message. The error information may be provided in the DELETE response body.

The NF Consumer may delete all record attached timers belonging to a record via the HTTP DELETE method on the relevant resource (/{realmId}/{storageId}/records/{recordId}/timers).

Reference is made to Figure 22 which shows a call flow the deletion all record attached timers belonging to a record in the UDSF.

In step 1: The NF service consumer (any NF) sends a DELETE request to the timer resource indicated by record ID. This request the deletion of all timers attached to that record.

If successful, in step 2a a success message, for example, a "204 No Content" message is returned by the UDSF to the NF consumer. All record attached timers associated with that record are deleted.

If a record for the given record ID does not exist in the UDSF or if the record has not timers, in step 2b, a message to indicate this is returned by the UDSF to the NF consumer. This message may be a "404 Not Found" HTTP status code.

For any other failure, in step 2c, a failure message is returned by the UDSF to the NF consumer. The failure message may comprise the appropriate HTTP status code indicating the error. This failure message may optionally include additional error information. The failure message may be a DELETE response message. The error information may be provided in the DELETE response body.

The NF Consumer may search for autonomous timers using the HTTP GET method on the timer store within the record (/{realmld}/{storageld}/timers/). The filter operation may be based on that used in the search operation using metaTags for records with the use of the "timerStatus" query parameter

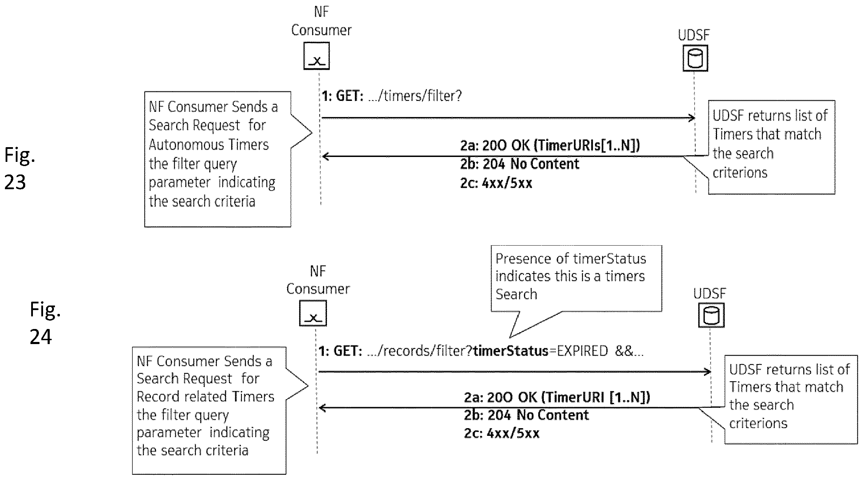

Reference is made to Figure 23 which shows a call flow for an autonomous timer search in the UDSF.

In step 1: The NF service consumer (any NF) sends a GET request to the timer store.

If successful, in step 2a a success message, for example, a "200 OK" message is returned by the UDSF to the NF consumer. The message body may contain the timers. The message body may contain a list with the URI of the Timers that meet the search criteria.

If a timer for the given timer ID does not exist in the UDSF, in step 2b, a message to indicate this is returned by the UDSF to the NF consumer. This message may be a "204 No content" HTTP status message.

For any other failure, in step 2c, a failure message is returned by the UDSF to the NF consumer. The failure message may comprise the appropriate HTTP status code indicating the error. This failure message may optionally include additional error information. The failure message may be a GET response message. The error information may be provided in the GET response body.

The NF Consumer may search for record attached timers using the HTTP GET method on the record store. The filter operation may be based on that used in the search operation using meta tags for records with the use of the "timer status" query parameter

Reference is made to Figure 24 which shows a call flow for a record attached timer search in the UDSF.

In step 1: The NF service consumer (any NF) sends a GET request to the record attached timer. This can specify the timer status in some embodiments. This can specify a specific record.

If successful, in step 2a a success message, for example, a "200 OK" message is returned by the UDSF to the NF consumer. The message body may contain the timers. The message body may contain a list with the URI of the Timers that meet the search criteria.

If a timer for the given timer ID does not exist in the UDSF, in step 2b, a message to indicate this is returned by the UDSF to the NF consumer. This message may be a "204 No Content" HTTP status message.

For any other failure, in step 2c, a failure message is returned by the UDSF to the NF consumer. The failure message may comprise the appropriate HTTP status code indicating the error. This failure message may optionally include additional error information. The failure message may be a GET response message. The error information may be provided in the GET response body.

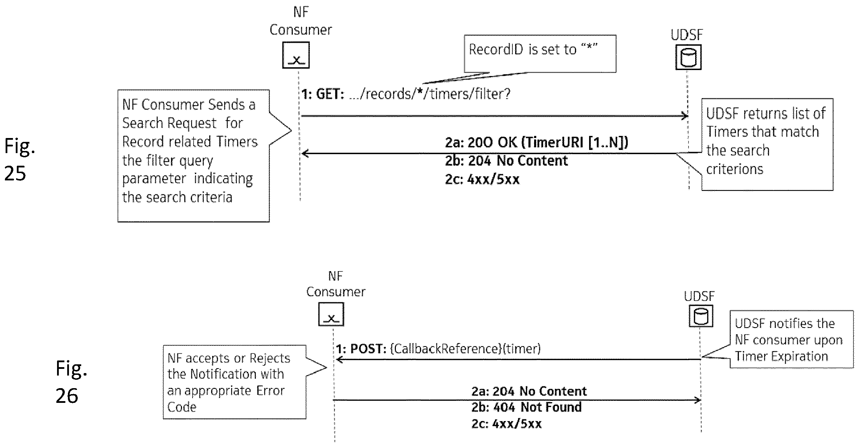

In some embodiments, a search may be applied where a wildcard (*) is used to search within the timer, the wildcard replacing the record ID. This call flow is shown in Figure 25. The call flow in Figure 25 is as described in relation to Figure 24 but with the use of the wildcard.

The NF Consumer may be notified for timer expiration. A notify message is sent by the UDSF to the NF Service Consumer when the record expires as indicated by the expiration time attribute of timer. The message is sent to the given call back reference.

Reference is made to Figure 26 which shows a call flow for a timer expiry notification.

In step S1, the UDSF sends a POST request to the call back URI. The request may contain the timer details,

If successful, in step 2a a success message, for example, a "204 No Content" message is returned by the NF consumer to the UDSF.

If the NF Service Consumer does not consider the "Callback URI" as a valid notification URI, then the NF consumer send a message to the USDF indicating this. The message may be the HTTP status code "404 Not Found"/

For any other failure, in step 2c, a failure message is returned to the UDSF by the NF consumer. The failure message may comprise the appropriate HTTP status code indicating the error. This failure message may optionally include additional error information. The failure message may be a POST response message. The error information may be provided in the POST response body.

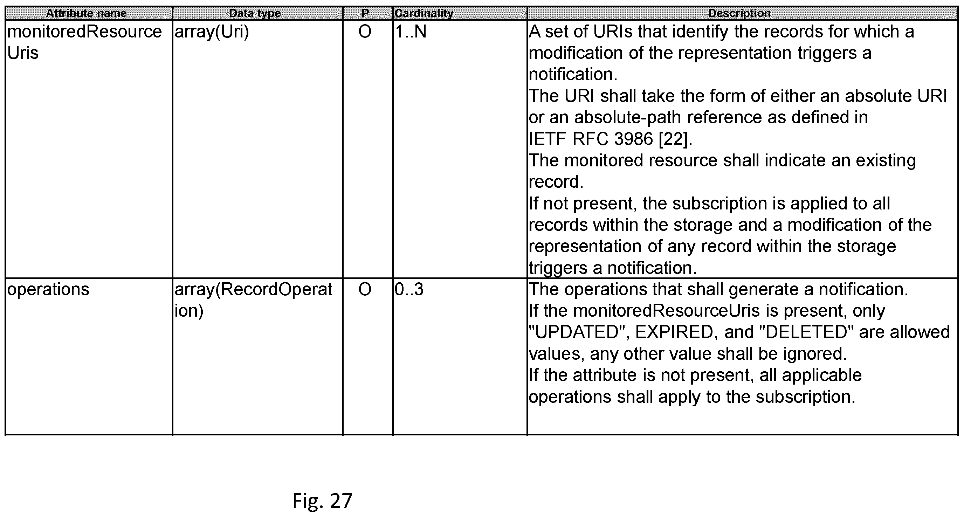

The NF Consumer may subscribe on a timer resource in a similar manner as currently supported for record resources. The subscription filter structure for timers may be shared with that used for records. However this may also include the filter operation "EXPIRED" as indicated in the operations row of table of Figure 27.

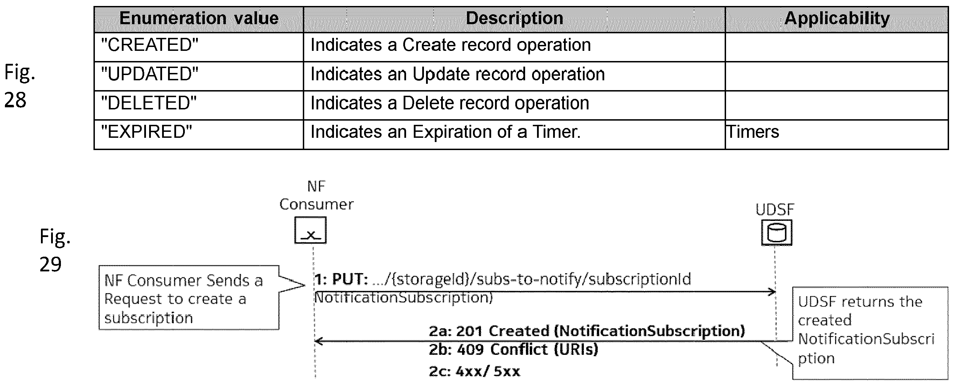

Reference is made to the table of Figure 28 which should the various record options provided by some embodiments.
"CREATED" indicates a create record operation
"UPDATED" indicates an update record operation
"DELETED" indicates a delete record operation
"EXPIRED" indicates an expiration of a timer such as previously discussed.

Reference is made to Figure 29 which shows an example call flow for the subscription to a timer resource.

In step 1, the NF service consumer sends a PUT request to the resource indicated by the storage ID and the subscription ID. The subscription may include the "EXPIRED" operation as one of the filters in some embodiments.

If successful, in step 2a a success message, for example, a "201 Created" message is returned by the UDSF to the NF consumer. The message body may contain the notification subscription. The expiry attribute of the received notification subscription may indicate a value or a value different from the request, if due to an operator policy, an expiry time is enforced or if the value in the request exceeded a maximum allowed expiry time.

If one or more monitored resource URIs from the request do not exist in the UDSF, a message may be sent in step 2b indication this. The message may be a "409 Conflict". The message may comprise the non-existing monitored resource URIs.

For any other failure, in step 2c, a failure message is returned by the UDSF to the NF consumer. The failure message may comprise the appropriate HTTP status code indicating the error. This failure message may optionally include additional error information. The failure message may be a POST response message. The error information may be provided in the POST response body.

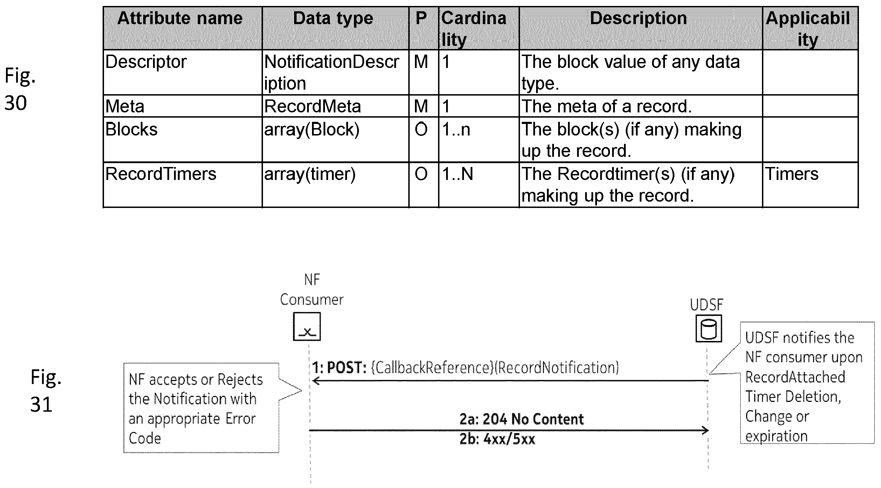

The NF Consumer may receive notifications for record attached timer resource status or value changes in a similar manner as used for record resources. the record notification may be extended to support timers as shown in the table of Figure 30. This table shows the definition of the record notification type having support for timers.

Reference is made to Figure 31 which shows an example call flow for the notification for record attached timers.

In step 1 the UDSF sends a POST request to the call back URI. The request may contain the record notification details. This may be sent when the timer is deleted, changed or expired, depending on the subscription.

If the notification is accepted, in step 2a a success message, for example, a "204 No Content" message is returned by the NF service consumer to the UDSF.

For failure, in step 2b, a failure message is returned to the UDSF by the NF consumer. The failure message may comprise the appropriate HTTP status code indicating the error. This failure message may optionally include additional error information. The failure message may be a POST response message. The error information may be provided in the POST response body

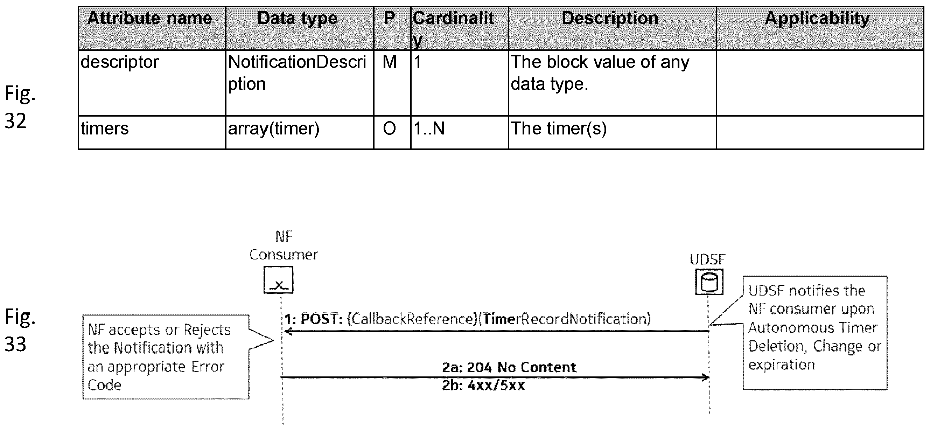

The NF Consumer may receive notifications for autonomous timer resource status or value changes in a similar manner as in relation to record resources. In this case the UDSF may include in the message body the timer record notification structure, as previously described. In this regard reference is made to the table of Figure 32 which shows the definition of the timer record notification type with the timers attribute as previously discussed.

Reference is made to Figure 33 which shows an example call flow for the notification for autonomous timers.

In step 1 the UDSF sends a POST request to the call back URI. The request may contain the timer record notification details. This may be sent when the timer is deleted, changed or expired, depending on the subscription.

If the notification is accepted, in step 2a a success message, for example, a "204 No Content" message is returned by the NF service consumer to the UDSF.

For failure, in step 2b, a failure message is returned to the UDSF by the NF consumer. The failure message may comprise the appropriate HTTP status code indicating the error. This failure message may optionally include additional error information. The failure message may be a POST response message. The error information may be provided in the POST response body

Some embodiments may be provided as an additional UDSF feature. The UDSF consumer may discover whether the UDSF can support the functionality of some embodiments via a supported features negotiation mechanism, such as specified in subclause 6.6.2 of 3GPP TS 29.500.

In some embodiments, the timer operations may be an extension of the Nudsf_DataRepository Service. However, other embodiments may be provided by any other suitable service - for example a timer repository service e.g. Nudsf_TimerRepository.

Some embodiments may store and manage the timer, such as previously described in the UDSF. It should be appreciated that other embodiments may be implemented in any other suitable network function. In some embodiments, the storing and managing of the timers may be managed by a dedicated timer function. The data store may be configured to store UE related data. The data may be UE state information. The data may be used in any suitable scenario.

Some embodiments may support network efficiency as a consumer may be notified on timer expiry. This may avoid the need for the consumer to poll for timer expiry.

Some embodiments may support timer accuracy. In some embodiments, the delivery of notifications may be closer to timer expiry than may be achieved by periodic consumer polling.

Some embodiments may support UDSF efficiency. In some embodiments, the UDSF may implement an optimized timer management mechanism rather than performing multiple bulk searches (when requested by consumers).

Some embodiments may support NF simplicity. In some embodiments, NF instances in a set may share timers. Notifications may be sent to the NF set regardless of which instance created the timer. When notifications are used, the NF instances may avoid the need to coordinate polling for timers.

Some embodiments may support flexibility. Timers may be used for different purposes. The UDSF may be used to store timers without mandating the presence of records. Some embodiments, may support the use to two or more parallel timers associated with a single record resources

Some embodiments may be used in any suitable scenario. For example, some embodiments may be used for a NF-set implementation based on stateless NFs with backend UDSF for timer storage.

In some embodiments, a NF may have three possible levels of state.

A NF may be a stateless NF. UE state information is pulled by the NF from the UDSF for the duration of a transaction only (e.g. PCF).

A NF may be state efficient NF. UE state information may be pulled by the NF from the UDSF and kept there during periods of high UE activity, cached for a few seconds or minutes. The UE state information may be stored by the NF in the UDSF at the end of a certain procedure (e.g. AMF or SMF).

A NF may be a stateful NF. UE state information may be stored permanently in the NF (e.g. UDR).

Stateless NFs or state efficient NFs operating as a set of NFs in case of NF failure may not know the Record ID of the relevant Record where the data required to complete an operation is stored and may have to fetch data stored in UDSF based on various search criterions. The criterion may be based on whatever is available by a request that triggered the operation or the background activity (e.g. subscriber permanent identifier (SUPI), global unique temporary identifier (GSPI), timer expiration, single-network slice selection assistance information (S-NSSAI) or other).

Another example is when the NF (e.g. AMF) may need to run a background activity to purge stale UEs. In order to complete this operation the NF may periodically need to send a search query to the UDSF to identify and retrieve the records of UEs for which a timer, for example a reachability timer, has expired.

Some of the previous embodiments have been described using a resource modelling format as set out in for example 3GPP29.501. Resources may represent objects that are modified by standard HTTP methods and that can be modelled with an appropriate archetypes. Resource archetypes are used to help API designers to structure the resources. Referring to an archetype may defines what operations and HTTP methods are supported by the resource. The document archetype is the conceptual base archetype of the other ones. Any resource that is not identified with one of the other resource archetypes is a document. This may be for example the timers described previously. The collection archetype can be used to model a resource that serves as a directory of resources. A collection may be NF Service Provider-managed so the NF Service Provider decides the URIs of each resource that is created in the collection. The store archetype can also be used to model a resource that serves as a directory of resources but a store is NF Service Consumer-managed. The NF Service Consumer decides what resource shall be added to / deleted from a store. The NF Service Consumer decides what the URI of the added resource is.

However, it should be appreciated that this is by way of example only and different embodiments may be provided using different techniques, for example for the resource modelling.

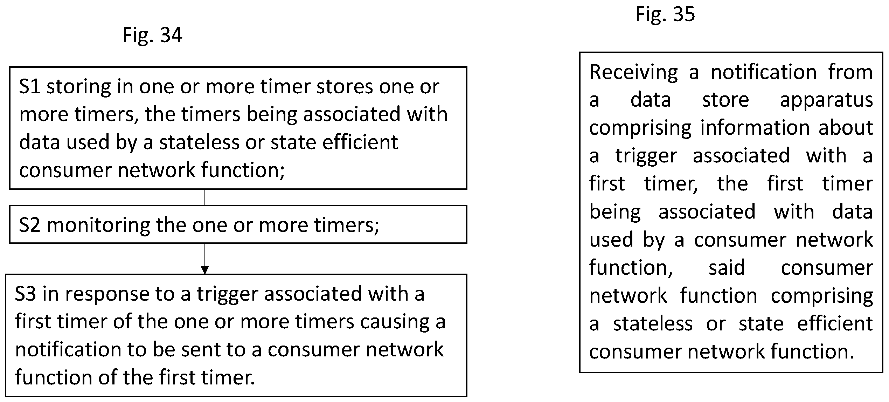

Reference is made to Figure 34 which shows a method. The method may be performed by a data store apparatus. This may be as described in relation to Figure 2.

The method comprises in S1, storing in one or more timer stores one or more timers, said timers being associated with data used by a stateless or state efficient consumer network function.

The method comprises in S2 monitoring said one or more timers.

The method comprises in S3, in response to a trigger associated with a first timer of the one or more timers causing a notification to be sent to a consumer network function of the first timer.

Reference is made to Figure 35 which shows a method. The method may be performed by a consumer network function or an apparatus of a consumer network function. This apparatus may be as described in relation to Figure 2.

The method comprises receiving a notification from a data store apparatus comprising information about a trigger associated with a first timer, said first timer being associated with data used by a consumer network function, said consumer network function comprising a stateless or state efficient consumer network function.

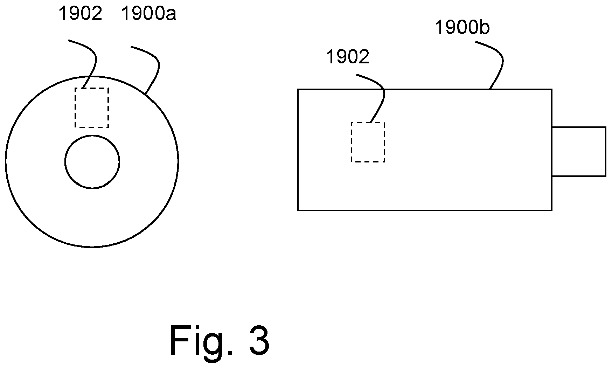

Figure 3 shows a schematic representation of non-volatile memory media 1900a (e.g. computer disc (CD) or digital versatile disc (DVD)) and 1900b (e.g. universal serial bus (USB) memory stick) storing instructions and/or parameters 1902 which when executed by a processor allow the processor to perform one or more of the steps of the methods of Figures 34 or 35

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figures 34 and 35, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. A data store apparatus comprising means for:
storing in one or more timer stores of the data store apparatus one or more timers, said timers being associated with data used by a stateless or state efficient consumer network function;
monitoring said one or more timers; and
in response to a trigger associated with a first timer of the one or more timers causing a notification to be sent to a consumer network function of the first timer.

2. The data store apparatus as claimed in claim 1, wherein means is for storing state information for one or more communication devices, said state being used by one or more network function consumers.

3. The data store apparatus as claimed in claim 1 or 2, wherein the trigger comprises one of an expiry of the first timer; a change in the first timer; and a deletion of the first timer.

4. The store apparatus as claimed in any preceding claim, wherein the means is for storing a subscription for the first timer indicating which one or more triggers the network function consumer of the first timer is to be notified.

5. The data store apparatus as claimed in any preceding claim, wherein the means is for storing a call back reference for the first timer, the call back reference indicating the one or more network function consumers to which the notification is to be sent.

6. The data store apparatus as claimed in any preceding claim, wherein a first one of the timer stores has one or more timers and is associated to a specific record related to a state of a communication device.

7. The data store apparatus as claimed in claim 6, wherein the means is for deleting the timers of the first one of the timer stores when the associated specific record is deleted.

8. The data store apparatus as claimed in claim 6 or 7, wherein the means is for creating, modifying, or deleting a timer of the first one of the timer stores in response to receiving a request from a consumer network function which indicates the associated specific record.

9. The data store apparatus as claimed in any preceding claim, wherein a second one of the timer stores has one or more timers required for processing of a stateless or state efficient consumer network function.

10. The data store apparatus as claimed in claim 9, wherein the second one of the timer stores is stored in a timer stores directly under a realm and storage.

11. The data store apparatus as claimed in claim 9 or 10, wherein the second one of the timer stores has timers for one or more non call processing related activities of a communication device.

12. The data store apparatus as claimed in claim 8, 9 or 10, wherein the means is for creating, modifying or deleting a timer of the second one of the timer stores in response to receiving a request from a network function consumer which indicates the associated timer resource.

13. The data store apparatus as claimed in any preceding claim, wherein the means are for receiving a search request from a network function consumer for information about one or more timers, performing a search in accordance with the search request to provide a search result comprising information about one or more timers and for providing a response comprising the search result.

14. The data store apparatus as claimed in claim 13, wherein the search request comprises a filter and the search result comprises information about one or more timers satisfying the filter, the filter comprising one or more of a timer status and a meta data tag associated with the timer.

15. The data store apparatus as claimed in any one of the preceding claims, wherein the data store apparatus comprises an unstructured data storage function.
